# EUROPEAN PATENT APPLICATION

(11) **EP 4 030 721 A1**
(43) Date of publication of application: **20.07.2022**
(21) Application number: 21151409.6
(22) Date of filing: 13.01.2021
(51) Int. Cl.: H04L 29/06, H04L 12/26, H04L 12/24

(54) **CONTROLLING A NETWORK PERFORMANCE OF A DECENTRALIZED DISTRIBUTED NETWORK**

(71) Applicant: Siemens Aktiengesellschaft, 80333 München (DE)
(72) Inventor: Sauer, Markus, 81739 München (DE); Singh, Saurabh Narayan, 81739 München (DE); Zupan, Nejc, 80337 München (DE)

(57) **Abstract**

Computer-implemented method for controlling a network performance of a decentralized distributed network comprising multiple registered nodes (N) or registrable nodes (RN), comprising the steps:
- storing (S1) a network information (NWI), wherein a network information comprises information about registered nodes, information about registration capacity for registering nodes with the decentralized distributed network by an entity and/or information about storage and computing capacity of nodes of the decentralized distributed network,
- storing (S2) at least one performance rule (PR) determining at least one condition for the network performance of the distributed network,
- monitoring (S3) the network performance and measuring at least one network performance parameter (NPP),
- checking (S4) the at least one network performance parameter (NPP) against the condition of the at least one performance rule (PR) and outputting a check result,
and
- modifying (S5) a number of registered nodes and/or modifying required storage and/or computing capacity of nodes of the decentralized distributed network depending on the check result and the provided network information.

## Description

The present invention relates to a computer-implemented method and a system for controlling a network performance of a decentralized distributed network.

Decentralized distributed networks like databases, block-chains and other networks, or networks for IoT devices comprise single nodes forming such a network, and allow for data distribution, duplication of data for higher fault tolerance, collective decision making and higher performance. A more centralized network architecture is generally used to maintain the network health, wherein generally one node monitors the network performance based on a certain set of rules. Such setup, however, though highly performant, has a so-called single point of failure: If the monitoring node fails, becomes unavailable or is corrupt, the whole network is vulnerable to errors or attacks. Decentralization improves upon this problem. In a truly decentralized network incorrect behavior is prevented by collective decision making and a voting-based mechanism for identification of incorrect transactions. Using probabilistic finality and byzantine fault tolerant consensus algorithms, the decentralized networks, for example blockchain, have fairly solved the fault tolerance issue.

The premise of the decentralized networks and probabilistic finality is, however, based on a plurality of nodes participating in the network. The higher the number of nodes, the lower the potential of fraud and misbehavior. Such networks can however be vulnerable to so-called 51% attacks. This has for example led to concerns about mining pools, where same individual or group of individuals run multiple blockchain nodes. Furthermore, if a total number of nodes of a network falls below a certain threshold, a group of nodes can become a majority causing such a consortium to be potentially vulnerable to attacks.

It is therefore an objective of the present invention to provide a mechanism to monitor and/or control the performance of a decentralized distributed network for preventing e.g. 51%-attacks and/or undesirable majority formation within the network.

The objective is solved by the features of the independent claims. The dependent claims contain further developments of the invention.

The invention provides according to the first aspect a computer-implemented method for controlling a network performance of a decentralized distributed network comprising multiple registered nodes and/or registrable nodes, comprising the steps:
- storing a network information, wherein a network information comprises information about registered nodes, information about registration capacity for registering nodes with the decentralized distributed network by an entity and/or information about storage and computing capacity of nodes of the decentralized distributed network,
- storing at least one performance rule determining at least one condition for the network performance of the distributed network,
- monitoring the network performance and measuring at least one network performance parameter,
- checking the at least one network performance parameter against the condition of the at least one performance rule and outputting a check result,
   and
- modifying a number of registered nodes and/or modifying required storage and/or computing capacity of nodes of the decentralized distributed network depending on the check result and the provided network information.

The method preferably is executed by program code, e.g. a smart contract. Preferably the method is integrated at protocol level of the decentralized distributed network.

The invention further provides according to a second aspect a system for controlling a network performance of a decentralized distributed network comprising multiple registered and/or registrable nodes, wherein the system is configured
- to store a network information, wherein a network information comprises information about registered nodes, information about registration capacity for registering nodes with the decentralized distributed network by an entity and/or information about storage and computing capacity of nodes of the decentralized distributed network,
- to store at least one performance rule determining at least one condition for the network performance of the distributed network,
- to monitor the network performance and measuring at least one network performance parameter,
- to check the at least one network performance parameter against the condition of the at least one performance rule and outputting a check result,
   and
- to modify a number of registered nodes and/or modifying required storage and/or computing capacity of nodes of the decentralized distributed network depending on the check result and the provided network information.

The system can comprise software and/or hardware components/modules which are configured to perform aforementioned method steps. Furthermore, components/modules can be distributed among several nodes of the decentralized distributed network.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing.

Within the context of embodiments of the invention, "computer-implemented" can be understood to mean for example an implementation of the method in which in particular at least one processor carries out at least one method step of the method. Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can also be understood to mean a virtualized processor, a virtual machine or a soft CPU.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention. A module can, by way of example, also be a node of the distributed database system that for example performs/realizes the specific functions/features of an applicable module. The respective modules can, by way of example, also be in the form of separate or standalone modules. To this end, the applicable modules can comprise further elements, for example.

These elements are for example one or more interfaces (e.g. database interfaces, communication interfaces - e.g. network interface, WLAN interface) and/or an evaluation unit (e.g. a processor) and/or a memory unit. The interfaces can be used for example to interchange (e.g. receive, convey, send or provide) data.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision. Within the context of embodiments of the invention, "provision" can also be understood to mean for example loading or storing, for example of a transaction containing applicable data. This can, by way of example, be effected on or by a memory module. "Provision" can also be understood to mean for example transmitting (or sending or conveying) of applicable data from one node to another node of the blockchain or of the distributed database system (or the infrastructure thereof).

Within the context of embodiments of the invention, "smart contract process" can be understood to mean in particular an execution of a program code (e.g. of the control instructions) in a process by the distributed database system or the infrastructure thereof.

Within the context of embodiments of the invention, "transaction" or "transactions" can be understood to mean for example a smart contract, a data structure or a transaction data record that, in particular, each comprise one of the transactions or multiple transactions. Within the context of embodiments of the invention, "transaction" or "transactions" can also be understood to mean for example the data of a transaction of a data block of a blockchain. A transaction can in particular comprise a program code that provides a smart contract, for example.

Within the context of embodiments of the invention, a "program code" (e.g. a smart contract) can be understood to mean for example a program instruction or multiple program instructions, in particular stored in one or more transactions. The program code is in particular executable and is executed by the distributed database system, for example. This can be realized by means of an execution environment (e.g. a virtual machine). The program code is preferably executed by the infrastructure of the distributed database system.

Within the context of embodiments of the invention, a "smart contract" can be understood to mean for example an executable program code (see in particular the "program code" definition). The smart contract is preferably stored in a transaction of a distributed database system (e.g. a blockchain), for example in a data block of the distributed database system. By way of example, the smart contract can be executed in the same way as explained in the definition of "program code", in particular within the context of embodiments of the invention.

Within the context of embodiments of the invention, a "decentralized distributed network" can be understood to mean for example a distributed database, a blockchain, a distributed ledger, a distributed memory system, a distributed ledger technology (DLT) based system (DLTS), a revision-proof database system, a cloud, a cloud service, a blockchain in a cloud or a peer-to-peer database. The distributed database system can be a public distributed database system (e.g. a public blockchain) or a closed (or private) distributed database system (e.g. a private blockchain), for example.

Within the context of embodiments of the invention, a "blockchain node", "node", "node of a distributed database system" and the like can be understood to mean for example devices (e.g. field devices), computers, smartphones, clients or subscribers that perform operations for (with) the distributed database system (e.g. a blockchain). Such nodes can, by way of example, execute transactions of a distributed database system or the data blocks thereof or insert or concatenate new data blocks with new transactions into the distributed database system by means of new data blocks.

Within the context of embodiments of the invention, "network performance" relates for example to number of registered nodes of one specific entity/consortia, network latency, network throughput, storage capacities, computing capacities and/or number of soft forks.

Within the context of embodiments of the invention, a "performance rule" can be understood to mean for example a rule or norm defining a network performance condition or requirement. In other words, a performance rule defines a condition for the network performance which shall be fulfilled, e.g. within a certain timeframe or at a point in time. For example, a performance rule can define or prescribe a specific performance value/condition which the network needs to satisfy. Furthermore, a performance rule can specify consequences or measures to be taken if requirements are (not) met.

Within the context of embodiments of the invention, a "network performance parameter" can be understood to mean a value or measure describing a specific network performance. A network performance parameter can be measured using e.g. a diagnose tool, e.g. Ping, or a load test.

Within the context of embodiments of the invention, "registrable nodes" can be understood as nodes which available to the decentralized network which are not yet registered and/or which are registered with the network but not actively used. For example, a consortium/an entity can define a number of registrable nodes when registering with the governance mechanism of the decentralized network, wherein not yet all of these nodes are used but are available for use. Hence, infrastructure is provided beforehand and becomes available when needed. The number of available nodes is in particular defined by the registration capacity.

Within the context of embodiments of the invention, "registered nodes" can therefore be understood as nodes already registered with the network, while registrable nodes can be connected to the network and are available for registering with the network.

Within the context of embodiments of the invention, "modifying a number of registered nodes and/or modifying required storage and/or computing capacity of nodes" can preferably be realized by de-registering registered nodes and/or registering registrable nodes with the network. In particular, "modifying a number of registered nodes" can be understood to mean registering/deregistering nodes.

It is an advantage of the invention to provide a monitoring and anomaly detection mechanism integrated at protocol level for the decentralized distributed network. To maintain the health of the network, the governance mechanism can be equipped with the capability to automatically spawn new nodes within different organizations or within consortia to maintain the balance and the quality of the network and keep the network growing within certain defined parameters and/or criteria. Therefore, 51%-attacks can be identified and prevented without the need of an external observation and/or intervention. The decentralized monitoring and recovery of network components can lead to a high failure- and drop-out-resilience. As no central authority for network monitoring is required, no single point of failure exists. The setup, storage execution, monitoring and starting of new nodes is decentralized and self-organizing.

According to a preferred embodiment of the invention, the condition determined by the at least one performance rule can relate to
- a predefined number of nodes registered by one entity,
- a predefined network throughput,
- a predefined network latency,
- predefined available storage and/or computing capacity of a node,
   and/or
- a predefined number of soft forks.

A performance rule therefore relates to an aforementioned condition and, preferably, a defined consequence if rule is not followed, e.g., modifying the number of registered nodes.

According to a further embodiment of the invention an entity of nodes can be registered with the decentralized distributed network and entity-specific registration information can be provided as part of the network information.

Entity-specific registration information preferably comprises information about registration and storage capacity of said entity. Furthermore, it can be specified by an entity whether modifying the number of nodes of said entity according to aforementioned method is allowed. Therefore, when registering a new entity with the network information about registrable nodes, i.e. registration capacity, of said entity is provided.

According to a further embodiment of the invention monitoring of the network performance can be performed by a predefined number of monitoring nodes or by a predefined proportion of monitoring nodes to other nodes.

Preferably the number of monitoring nodes depends on the total number of registered nodes and/or registered entities. Thus, an imbalance in the number of monitoring nodes is prevented.

According to a preferred embodiment of the invention the number of registered nodes and/or required storage and/or computing capacity of nodes of the decentralized distributed network can be modified if the check result is negative.

Hence, registering further registrable nodes or deregistering registered nodes allows to control the network performance and/or to maintain network health and balance.

According to a preferred embodiment of the invention, modifying the number of registered nodes and/or modifying required storage and/or computing capacity of nodes of the decentralized distributed network can be constrained by at least part of the network information and/or by an entity-specific registration information.

Network modification is preferably depending on available resources, hence, provided network information and/or entity-specific registration information is considered when (de)registering nodes. Hence, the network information and/or entity-specific registration information can be understood as constraints or boundary conditions for network modification.

According to a further embodiment of the invention, monitoring the network performance can be performed after generating a data block.

This allows regular network surveillance and hence fast reaction in case of poor network performance.

According to a preferred embodiment of the invention, the number of registered nodes can be modified by registering a registrable node with and/or deregistering a registered node from the decentralized distributed network.

Hence, the number of registered nodes can be automatically adapted depending on the network performance preventing formation of node majorities.

According to a preferred embodiment of the invention, the number of registered nodes and/or required storage and/or computing capacity of nodes of an entity can be modified depending on the respective, entity-specific registration information.

According to a further embodiment of the invention, the number of registered nodes of the entity can be modified if said number exceeds a threshold.

If an entity for example has a majority of registered nodes, the method allows deregistering a number of registered nodes of said entity to achieve a balance.

According to a further embodiment of the invention, a node of the entity is randomly selected for registering with or de-registering from the decentralized distributed network.

This further improves the network security and/or performance.

According to a further embodiment of the invention, the decentralized distributed network is a distributed database, a blockchain or a distributed ledger.

In addition, a computer program product is claimed, which is directly loadable into the internal memory of a digital computer, comprising software code portions for performing the aforementioned method steps when said computer program product is run on a computer.

The invention will be explained in more detail by reference to the accompanying figures.
Fig. 1: shows a first exemplary embodiment of the invention; and
Fig. 2: shows a second exemplary embodiment of the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

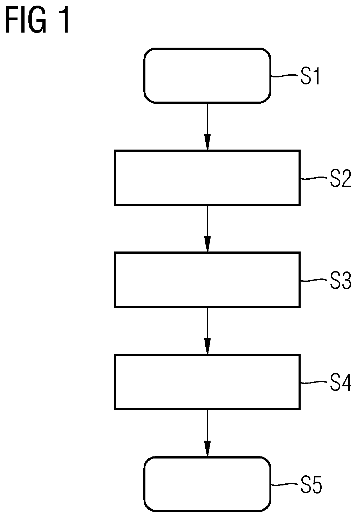

Fig. 1 shows a first exemplary embodiment of the invention. It shows a flow-chart presenting the method steps of a computer-implemented method for controlling a network performance of a decentralized distributed network. The decentralized distributed network comprises multiple registered nodes and/or registrable nodes, preferably of several different entities. The decentralized distributed network can be the infrastructure for a distributed database system.

The method is preferably executed by program code. The method can be integrated at protocol level of the communication protocol of the decentralized distributed network.

In the first step S1 a network information about the decentralized distributed network is stored. The network information comprises information about registered nodes, information about registration capacity for registering nodes with the decentralized distributed network by an entity and/or information about storage and computing capacity of nodes of the decentralized distributed network.

In the next step S2 at least one performance rule is stored which determines at least one condition for the network performance of the distributed network.

The performance rule determines a condition relating to
- a predefined number of nodes registered by one entity,
- a predefined network throughput,
- a predefined network latency,
- predefined available storage and/or computing capacity of a node,
   and/or
- a predefined number of soft forks.

The performance rule can for example define a threshold value and a measure to be taken if the threshold is exceeded.

In the next step S3 the network performance is monitored, wherein at least one network performance parameter is measured. Preferably, the measurement is predefined, e.g. measuring the network latency, returning a latency period as network performance parameter. Furthermore, several performance parameters can be measured simultaneously.

Monitoring the network performance is preferably performed after creation of a data block.

In the next step S4 the measured network performance parameter is checked against the condition of the predefined performance rule and a check result is outputted. For example, the measured latency period is checked against a given latency threshold value defined by a corresponding performance rule. Preferably, several measured performance parameters can be simultaneously checked against respective performance rules.

If the performance parameter meets the criterium/condition defined by the performance rule, a positive check result is outputted. If it does not meet the criterium/condition, a negative check result is outputted. Furthermore, the performance rule can specify the measure to be taken in each case, like modifying the number of registered nodes, the storage and/or computing capacity. Hence, when executing the performance rule, such network properties can be modified depending on the check result.

In the next step S5 the number of registered nodes and/or the required storage and/or the required computing capacity of nodes of the decentralized distributed network is modified depending on the check result, in particular if the check result is negative, and depending the provided network information. Hence, this step S5 basically represents execution of a respective performance rule.

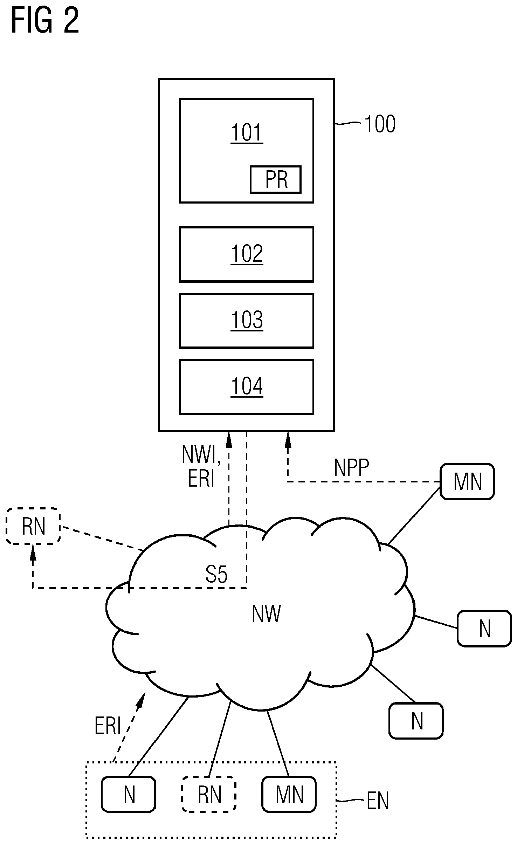

Figure 2 shows a second exemplary embodiment of the invention. It shows a decentralized distributed network NW comprising a plurality of registered nodes N and/or registrable nodes RN, which both can be part of an entity EN. Furthermore, a system 100 is shown, which is configured to control the network performance of the decentralized distributed network NW. The system 100 can for example be understood as part of a governing smart contract implemented and executed on the nodes of the decentralized distributed network NW. Components/modules 101-104 of the system 100 an furthermore be part of at least one node of the distributed network NW.

The system 100 comprises a storage module 101, which is configured to store a network information NWI, wherein a network information NWI comprises information about registered nodes N and/or registrable nodes RN, information about registration capacity for registering nodes with the decentralized distributed network by an entity EN and/or information about storage and computing capacity of nodes of the decentralized distributed network NW.

When an entity EN of nodes is registered with the decentralized distributed network NW, it provides entity-specific registration information ERI to the system 100. The entity-specific registration information ERI can be stored as part of the network information NWI. Entity-specific registration information ERI preferably comprises information about registration and storage capacity of said entity EN. Furthermore, it can be specified by an entity whether modifying the number of nodes of said entity according to aforementioned method is allowed.

The storage module is further configured to store at least one performance rule PR. The performance rule PR determines at least one condition for the network performance of the distributed network.

The system 100 can further comprise a monitoring module 102 which is configured to monitor the network performance and measuring at least one network performance parameter NPP. For example, a total number of nodes of the network NW or of an entity EN can be monitored in order to prevent formation of majorities of nodes.

Preferably, a monitoring module 102 can be implemented on some of the nodes registered with the network NW, so called monitoring nodes MN. Then, monitoring of the network performance is performed by a predefined number of monitoring nodes MN or by a predefined proportion of monitoring nodes MN to other nodes N. The monitoring nodes MN then provide the at least one network performance parameter NPP by, e.g., measuring storage and/or computing resources, the network throughput or the network latency or tracking the number of registered nodes or soft forks.

The system 100 further comprises a check module 103 which is configured to check/evaluate the at least one network performance parameter NPP against the at least one performance rule PR and to output a check result.

For example, the total number of registered nodes of an entity EN is checked against a predefined maximum value of allowed registered nodes for said entity or for the network, wherein the predefined value is defined by a performance rule PR. Alternatively, the total number of registered nodes of that entity EN is compared with the number of nodes of other entities and/or the total number of registered nodes of the network NW, wherein a comparison condition is defined by the performance rule PR.

The system 100 further comprises a modification module 104 which is configured to modify the number of registered nodes and/or to modify required storage and/or computing capacity of nodes of the decentralized distributed network NW depending on the check result and the provided network information NWI. The modification module 104 is preferably triggered depending on the check result and the condition defined by the performance rule. The network information NWI is considered as a boundary condition when modifying the number of registered nodes, storage and/or computing capacity of nodes. For example, the network information NWI can specify a minimum of total number of nodes or required minimum storage and/or computing capacity.

When monitoring the network performance, the distribution of number of nodes among the registered entities can be checked against a given performance rule PR. The performance rule PR can for example define a maximum threshold of registered numbers with a specific entity EN. In case the number of registered nodes of an entity EN exceeds this threshold, the modification module 104 can initiate deregistration of registered nodes N of said entity EN or, alternatively, can initiate registering further registrable nodes RN of other entities with the network. The registration and/or deregistration is controlled depending on the performance rules PR. Furthermore, registration and/or deregistration of nodes is constrained by at least part of the network information NWI and/or by an entity-specific registration information ERI.

Accordingly, further network performance checks according to different performance rules can be performed. A performance rule PR can define a required network throughput, a network latency and/or required storage and/or computing capacity.

Depending on respective check results, modifying the number of registered nodes and/or modifying required storage and/or computing capacity of nodes of the decentralized distributed network is triggered, if a performance rule PR is not met.

By registration and/or deregistration of nodes depending on the observance of respective performance rules PR, the performance of the decentralized distributed network NW can be controlled, such that defined network performance, e.g., balanced node distribution, is maintained.

Network performance monitoring, like health monitoring and/or anomaly detection and according maintenance can also be explained based on Fig. 2 as follows:
In phase 1 a distributed database system is setup for the decentralized distributed network NW, wherein, genesis data is copied across all initial participating nodes N. Genesis data comprise for example network information NWI. Each node preferably is assigned to an entity EN, also called organization. An entity EN preferably has a minimum of one node N.

Every initial participating node is registered by the governing smart contract in following steps: The governing smart contract is part of genesis data. Every initial node has an identity stored at the time of orchestration in genesis data. When the initial nodes execute the governing smart contract for the first time, their keys or unique identifiers are verified/matched against the identity stored as part of genesis data. Upon verification, nodes N are registered as part of their respective entities/organizations EN in the governing smart contract.

For network performance monitoring, the following performance rules PR can for example be defined. The performance rules PR can comprise the following parameters defining and observing following phenomena:
PR(i): A majority of nodes shall not belong to one particular entity/organization. This prevents e.g. a 51% attack.
PR(ii): Throughput of the network is preferably constantly observed by the governing smart contract, e.g. based on amount of time required to verify one transaction and create one data block.
PR(iii): Network latency is preferably constantly observed by the governing smart contract, e.g. based on amount of time needed for the votes to arrive for the consensus mechanism.
PR(iv): Insufficient storage and/or computing capacity: If nodes require too much computing time or the storage requirements grow higher than a defined threshold. This can for example be observed based on the size of shards.
PR(v): Number of soft forks: Soft forks are created when different nodes vote on different blocks to be the next block. Huge number of soft forks can be a sign that certain set of nodes are trying to break away from the consensus on purpose.

When a new node wants to join the network, it has to register either as a new entity/organization or as part of an existing entity/organization.

A set of nodes is predefined in the governing smart contract as being part of the monitoring nodes MN. With the network growing, further nodes are added to the monitoring nodes MN. Each entity has a limiting number of monitoring nodes MN allowed, wherein this number can be dynamically defined by the governing smart contract based on the number of entities, e.g. proportional, to prevent formation of majority monitoring nodes MN within a single entity EN.

Every entity EN also registers following entity-specific registration information ERI to the governing smart contract:
a. An information whether the entity wants to or not to spawn new nodes to maintain the network health ("yes/no about new nodes").
b. A threshold of number of registrable nodes RN that the entity EN can afford.
c. Maximum storage/computing capacity which the entity nodes can afford.

In phase 2, the network health monitoring is performed as follows:
Preferably after creation of each new data block, the monitoring nodes MN observe the performance of the network NW based on the defined performance rules PR. The observation and network control are preferably performed automatically by the governing smart contract, following the method steps as exemplary shown in Fig. 1.

The performance metrics are fed to the governing smart contract at the end of the new block creation and it runs the performance monitoring and control by the defined rules PR and specified parameters therein. If the parameters specified in the performance rules PR are met, the networks health is considered good and preferably the number of registered nodes N and/or the storage and/or computing capacity is not modified.

If the parameters are not met, the missing rule raises an alert in the governing smart contract. The alert can be sent to the monitoring nodes MN. The monitoring nodes MN observe the alert, compare it to the current network parameters and register a new node or set of nodes based on the rule that triggered the issue.

With respect to aforementioned performance rules PR(i)-PR(v), the following measures are triggered, if the parameters are not met:
- with respect to PR(i): A new node can be spawned within any entity/organization other than the one which has or is on the verge of forming the majority now. Preference is given to entities with lower number of nodes. An entity is chosen for spawning new nodes based on the entity-specific registration information provided by the entities.
- with respect to PR(ii): If the network has an excess of resources, an entity which has or is on the verge of forming the majority will be forced to decrease the number of nodes (as long as the number of the nodes does not go beyond the defined minimum), to keep desired decentralization factor and also decrease overall cost of running/operating the network.
- with respect to PR(ii) to PR(v): If these rules are failing, this could be directly impacted because of the computing and storage capabilities of nodes. In this case, a new node is spawned in an entity based on the network information NWI and/or entity-specific registration information ERI.

In phase 3 new nodes are registered if one of the performance rules PR are triggered. The monitoring nodes MN identify a set of potential candidate entities based on the governing smart contract results. The governing smart contract controls the permissions to spawn a new node in any organization based on the network information NWI and/or entity-specific registration information ERI. The monitoring nodes MN select a candidate node, preferably at random, from the candidate entities. This candidate node can then be registered with the network NW.

The governing smart contract has access to the common world state of the entity. The common world state of an entity might be different compared to the global world state because of sharding. The common world state is replicated, and a new node is created with a new identity, but the entity identity stays the same as the candidate entity identity. The new node is recorded in the governing smart contract. The new node may or may not be added to the list of monitoring nodes based on the minimal requirements of the network. When the next data block is created, the modified network is checked against the defined performance rules PR.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for controlling a network performance of a decentralized distributed network comprising multiple registered nodes (N) and/or registrable nodes (RN), comprising the steps:
- storing (S1) a network information (NWI), wherein a network information comprises information about registered nodes, information about registration capacity for registering nodes with the decentralized distributed network by an entity and/or information about storage and computing capacity of nodes of the decentralized distributed network,
- storing (S2) at least one performance rule (PR) determining at least one condition for the network performance of the distributed network,
- monitoring (S3) the network performance and measuring at least one network performance parameter (NPP),
- checking (S4) the at least one network performance parameter (NPP) against the condition of the at least one performance rule (PR) and outputting a check result,
and
- modifying (S5) a number of registered nodes and/or modifying required storage and/or computing capacity of nodes of the decentralized distributed network depending on the check result and the provided network information.

2. Computer-implemented method according to claim 1, wherein the condition determined by the at least one performance rule relates to
- a predefined number of nodes registered by one entity,
- a predefined network throughput,
- a predefined network latency,
- predefined available storage and/or computing capacity of a node,
and/or
- a predefined number of soft forks.

3. Computer-implemented method according to one of the preceding claims, wherein an entity (EN) of nodes is registered with the decentralized distributed network and entity-specific registration information (ERI) is provided as part of the network information.

4. Computer-implemented method according to one of the preceding claims, wherein monitoring of the network performance is performed by a predefined number of monitoring nodes (MN) or by a predefined proportion of monitoring nodes (MN) to other nodes.

5. Computer-implemented method according to one of the preceding claims, wherein the number of registered nodes and/or required storage and/or computing capacity of nodes of the decentralized distributed network is modified if the check result is negative.

6. Computer-implemented method according to one of the preceding claims, wherein modifying the number of registered nodes and/or modifying required storage and/or computing capacity of nodes of the decentralized distributed network is constrained by at least part of the network information (NWI) and/or by an entity-specific registration information (ERI).

7. Computer-implemented method according to one of the preceding claims, wherein monitoring the network performance is performed after generating a data block.

8. Computer-implemented method according to one of the preceding claims, wherein the number of registered nodes is modified by registering a registrable node with and/or deregistering a registered node from the decentralized distributed network.

9. Computer-implemented method according to claim 8, wherein the number of registered nodes and/or required storage and/or computing capacity of nodes of an entity is modified depending on the respective, entity-specific registration information.

10. Computer-implemented method according to claim 8 or 9, wherein the number of registered nodes of the entity is modified if said number exceeds a threshold.

11. Computer-implemented method according to one of the claims 9 to 10, wherein a node of the entity is randomly selected for registering with or deregistering from the decentralized distributed network.

12. Computer-implemented method according to one of the preceding claims, wherein the decentralized distributed network is a distributed database, a blockchain or a distributed ledger.

13. System (100) for controlling a network performance of a decentralized distributed network comprising multiple registered and/or registrable nodes, wherein the system is configured
- to store a network information, wherein a network information comprises information about registered nodes, information about registration capacity for registering nodes with the decentralized distributed network by an entity and/or information about storage and computing capacity of nodes of the decentralized distributed network,
- to store at least one performance rule determining at least one condition for the network performance of the distributed network,
- to monitor the network performance and measuring at least one network performance parameter,
- to check the at least one network performance parameter against the condition of the at least one performance rule and outputting a check result,
and
- to modify a number of registered nodes and/or modifying required storage and/or computing capacity of nodes of the decentralized distributed network depending on the check result and the provided network information.

14. Computer program product directly loadable into the internal memory of a digital computer, comprising software code portions for performing the method steps of one of the claims 1 to 12 when said computer program product is run on a computer.
